# EUROPEAN PATENT SPECIFICATION

(11) **EP 1 621 255 B1**
(45) Date of publication and mention of the grant of the patent: **10.12.2008**
(21) Application number: 04742025.2
(22) Date of filing: 23.06.2004
(51) Int. Cl.: B05B 9/08

(54) **MANUAL SPRAYER FOR HORTICULTURAL AND SIMILAR PURPOSES**
MANUELLE SPRITZVORRICHTUNG FÜR GARTENBAU- UND ANDERE ÄHNLICHE ZWECKE
PULVERISATEUR MANUEL POUR L'HORTICULTURE ET DOMAINES ANALOGUES

(30) Priority: 30.04.2004 ES 200401040
(43) Date of publication of application: 01.02.2006
(73) Proprietor: GOIZPER, S. COOP., E-20577 Antzuola (ES)
(72) Inventor: ESPESO ANSOLA, Angel, Ma, Motrico (ES)
(74) Representative: Durán Moya, Luis-Alfonso
(86) International application number: PCT/ES2004/000295
(87) International publication number: WO 2005/105319

(56) References cited:
- EP-A2- 0 230 968
- ES-U- 1 031 930
- US-A- 470 688
- US-A- 4 196 828
- US-A- 5 335 855
- US-A- 5 356 049

## Description

The present invention relates to a hand-held sprayer which is particularly applicable to horticulture and the like.

Document US4196828 discloses a hand-held sprayer according to the preamble of claim 1.

The object of the present invention is to disclose a sprayer which is simple in construction, economical to produce and reliable and durable.

This is achieved with a hand-held sprayer according to the features of claim 1.

The structure of the sprayer according to the present invention is very simple, combining a hand-operated pump with a container of considerable size having an overall delivery capacity combined with a compressed liquid outlet which is controlled by a trigger-actuated slide valve and a spray nozzle having a single orifice with coaxial distribution of liquid. The hand-operated pump has a considerable diameter which is slightly smaller than the body supporting the assembly of actuating valve, spray nozzle and grip, which may be screwed to the liquid-carrying container.

One of the characteristics of the sprayer according to the present invention is its formation by a very small number of parts having geometrically very simple characteristics that allow very low production costs. For example, the main body is basically formed by a single part incorporating the cylinder of the hand pump in a single part which also includes the housing for the slide valve and the support for the spray nozzle. This not only allows an air cylinder of maximum size, which allows a reduction in the pumping time required to achieve the working pressure, but also the production of the sprayer body from a minimum of parts, which helps to reduce production costs.

To sum up, the sprayer is of the type comprising a container for the spray liquid, with a hand pump for supplying compressed air to the interior of the container, an outlet nozzle and an intermediate valve for controlling the passage of liquid to the outlet nozzle, and is characterised by the production of the body of the sprayer as a single injection moulding that exhibits an external casing and an internal tubular element, such that the external casing is connected with a press-fit to the upper portion of the container and the internal tubular body receives, in its interior, the piston of the hand pump of the sprayer, the upper front portion of said body comprising a housing for receiving a horizontal slide valve actuated by a trigger to control spraying; as well as a cylindrical extension for receiving the tubular horizontal body of said nozzle. The sprayer body is extended at the rear portion remote from the nozzle by an extension having ergonomic characteristics to facilitate the location of the hand at the moment of use.

The body receives, in its upper portion, a cover which engages with the tubular element of the body, with the ergonomic rear projection thereof and with the tubular horizontal body of the nozzle, its connection being made by clipping at various points of its periphery.

To assist understanding, some drawings of a sprayer produced in accordance with the present invention are appended as explanatory, non-limiting examples.
Fig. 1 is a complete section of a sprayer produced according to the present invention.
Fig. 2 is a section in detail of the control and spray head.
Fig. 3 is a cross-section through the sectional plane indicated in Fig. 1.
Fig. 4 is a view of the lower face of the spraying device.
Fig. 5 is a view on an enlarged scale showing the zone of actuation by a trigger and of passage of liquid toward the nozzle.
Fig. 6 is a plan view of the sprayer with the upper cover removed.
Fig. 7 to 12 show details of the fastening of the upper cover of the sprayer by clipping.

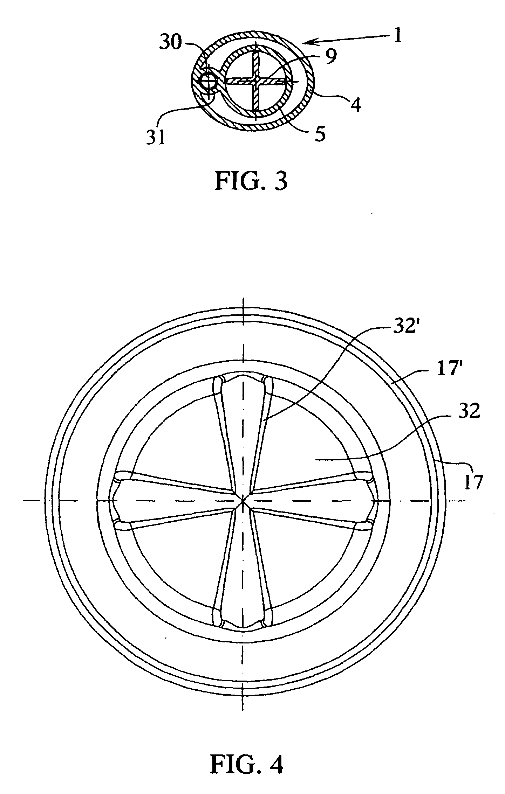

As shown in the figures, the design of the sprayer according to the present invention mainly comprises an intermediate body 1, the lower container 2 for holding the liquid that is to be sprayed and a nozzle assembly 3 for spraying the liquid. The body 1 is produced in a single part and comprises an external casing 4 and an internal body 5 which is the cylinder of the air compression pump, in the interior of which there slides the compression piston 6, said body 1 similarly comprising the housing 7 in the front portion for receiving the manual control valve and the front extension 27 for receiving the tubular element 20 for the intake of liquid to the nozzle. The piston 6 is connected to a long actuating rod 9 which, at the upper portion, comprises a handhold 10 moulded into an anatomical shape, together with the actual rod and the piston forming a single assembly of the pump which is displaceable within the cylinder 5. The rod 9 preferably has a cross-shaped cross-section, as shown in Fig. 3. The structure of the upper end 10 is suitable for the ergonomic gripping of the displaceable assembly of the air compression pump comprising, for example, the rear portion 11 which is optionally elongated to allow easy manual gripping, and the form of the intermediate collar 12 is similarly suitable for the improved gripping thereof. Said unitary body 1 similarly comprises an extension 13 to allow ergonomic, convenient and firm gripping of the sprayer with a single hand which in this way by one portion grips the sprayer by the body 1 with the hand located on the extension 13 and having the possibility of simultaneously actuating the front trigger 14 that actuates the slide valve to allow passage of the liquid.

The cylinder 5 will usually comprise the valve assembly to allow the admission of air from the exterior to the interior of the cylinder and from there to the container 2, only a resilient nonreturn valve 15 of conventional design having been shown in the lower portion of the tubular element 5 for the sake of clarity.

The container 2 is made up of two component parts, one being the upper part 16 and the other, the lower part 17, comprising a cylindrical skirt with a lower support rim 17' that defines a stable lower surface to allow vertical placement of said container and which defines the central portion 32 in the form of a spherical cap with lower ribs 32'. The lower part 17 is coupled to the lower part of the container 2 by locating pins such as 50 and 51 and a rigid connection, for example by adhesive, a welding system and the like.

The part 16 forming the upper portion of the container 2 has an internal cylindical extension 18 adapted for the press-fitting of the lower portion of the intermediate body 1 of the sprayer. A seal 19 ensures that said container is hermetically sealed.

The nozzle assembly 3 comprises a liquid-conveying internal cylindrical body 20 which is provided with a coaxial orifice 21 and comprises, in its front portion, radial apertures 22 that communicate via grooves with the single front outlet 24 for the spray jet. Said body 20 is surrounded at the front by the cap 25 which comprises said outlet aperture 24 and defines, in its front portion, the cavity 26 where the jets of liquid are combined and turbulently mixed before issuing through the aperture 24. The actual body 20 is press-fitted within the cylindrical extension 27 of the intermediate body and carries O-ring seals 28 and 29 in the region of its ends to produce a tight seal from said external cap 25 and cylindrical extension 27.

The liquid held in the container 2 passes to the nozzle body 3 via a tubular element 30 which is press-fitted at the top into a recess 31 produced in the intermediate body 4 of the sprayer 1 and, at the bottom, reaches to the vicinity of the bottom 32 of the container 2.

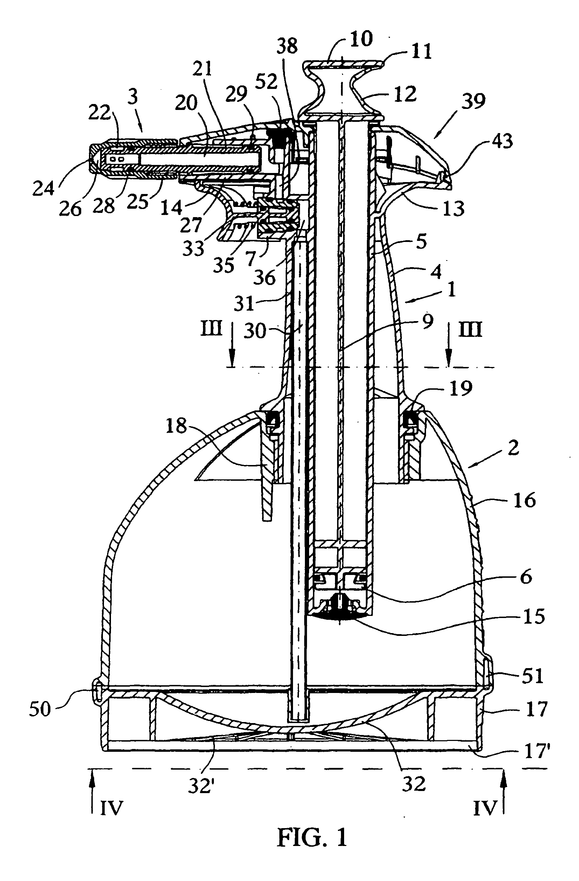

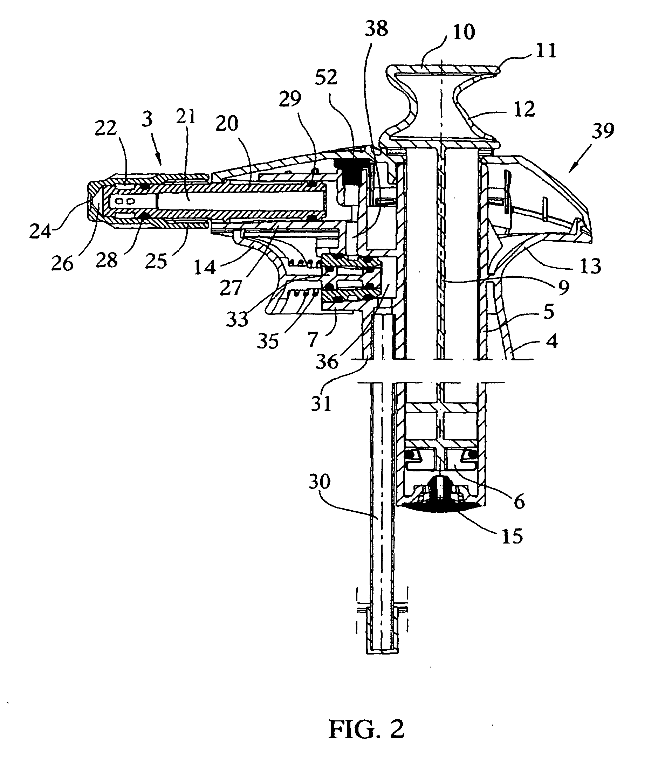

The passage of the liquid between the tubular conduit 30 and the nozzle assembly 3 is controlled by a slide valve 33 of which the displacement is controlled by the manually actuated trigger 14 which, in turn, is subjected to the opposing action of a helical spring 35. In this way, by overcoming the action of the spring 35, as in the position shown in Fig. 1 and 2, the slide valve 33 which has longitudinal grooves occupies a position in which the liquid originating from the tube 30 can reach an internal chamber 36 and, along the slide valve 33, can pass to a communicating chamber 38 in which there opens the end of the orifice 21 of the nozzle body 20.

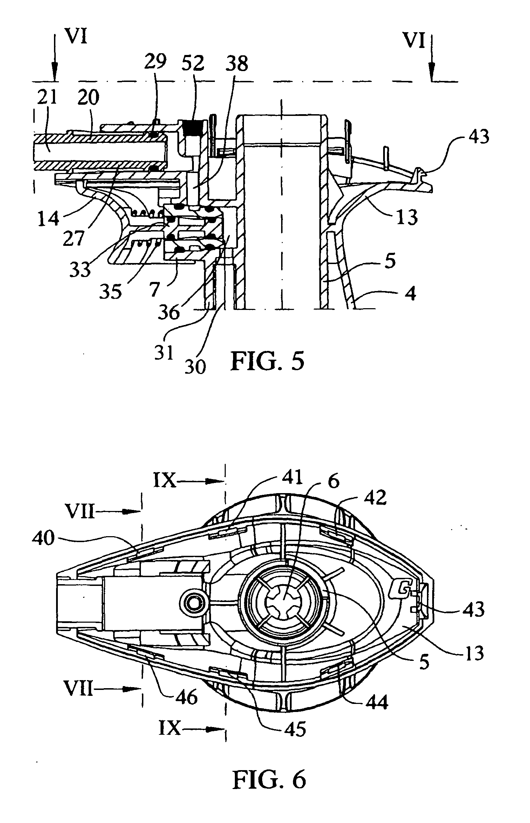

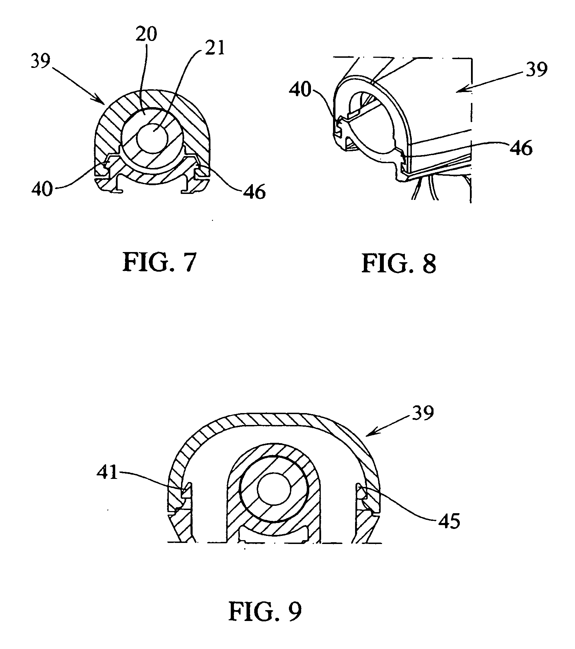

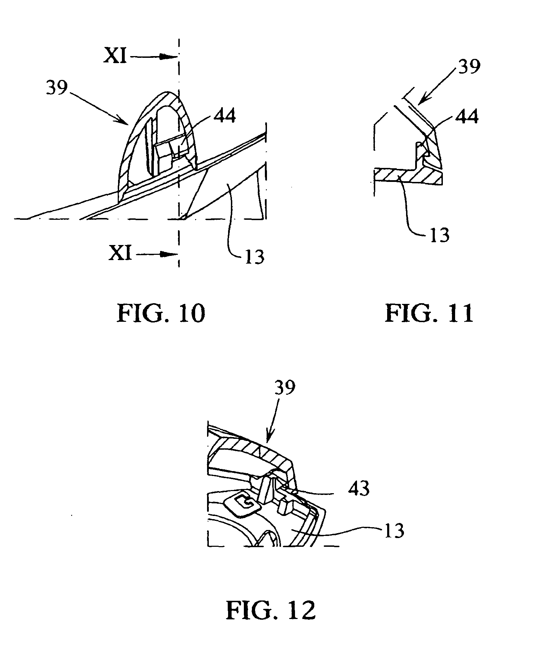

An upper unitary cover 39 closes the entire top portion of the sprayer body, a plurality of latching points being provided for this purpose, as shown in Fig. 6, in which they are designated by the numerals 40, 41, 42, 43, 44, 45 and 46, the number and disposition of said latching points varying widely. As shown in the details in Fig. 7 to 12, hook-shaped projections in a male/female disposition are provided at all the latching points, and it will be appreciated that other types of latch-type detent profiles may be produced without departing from the scope of the present invention.

The actual cover 39 presses a stopper 52 for access to the chamber 38 connecting the slide valve 33 and the tubular element 20 for conveying liquid to the nozzle.

Owing to the described design, the sprayer according to the present invention may be produced simply and economically with a very small number of parts, and this reduces the production costs and also results in a significant increase in the reliability of operation and durability.

## Claims

1. Hand-held sprayer for horticulture and the like, comprising:
- a container (2) for a spray liquid;
- a hand pump (6, 9, 10, 11, 12) for supplying compressed air;
- an outlet nozzle (3),
- a hand-operated valve (33) for controlling the passage of liquid to the outlet nozzle (3); and
- an intermediate body (1), that exhibits an external casing (4) and an internal tubular element (5), such that the external casing (4) is connected to the upper portion (16) of the liquid container (2), and the internal tubular element (5) receives in its interior the piston (6) of the hand pump, the upper front portion of said intermediate body (1) comprising a housing (7) for receiving a valve (33) for communication with a chamber (38) communicating with the spray nozzle (3),
the hand-held sprayer also comprising a cylindrical extension (27) receiving a tubular body (20) for conveying liquid to the spray nozzle (3) and a rear extension (13) for ease of holding the hand-held sprayer during use thereof and said sprayer body being closed at its upper portion by a cover (39),
the hand-held sprayer being **characterized in that:**
- said hand pump is used to supply compressed air to the container (2),
- said valve (33) is a horizontal slide valve,
- said intermediate body (1) is conceived as a single injection moulded piece comprising said casing (4), said internal tubular element (5), said housing (7) and said cylindrical enlargement (27) and, at a rear portion remote from the nozzle (3), said extension (13)
- said cover (39) is conceived as a single injection moulded cover which acts as a fairing for the upper portion of the sprayer, and at its front portion surrounds said tubular body (20) and presses a stopper (52) which doses said chamber (38) for passage of liquid toward the nozzle (3).

2. Hand-held sprayer for horticulture and the like according to claim 1 **characterised in that** the air pump piston (6) is formed as a single part with its rod (9) and an upper grip part (10) of anatomical shape for the easy gripping thereof for the pumping operation.

3. Hand-held sprayer for horticulture and the like according to claim 1, **characterised in that** the nozzle assembly (3) is introduced by press-fitting and is fixed by the cover (39) in a surrounding recess of the upper portion of the sprayer body and, at the front end, is closed by an external cap (25) which is screwed thereon and comprises an outlet orifice (24) to which the compressed liquid travels via an axial orifice (21) of said tubular body (20) and a system of radial apertures (22) and extreme grooves of the actual tubular body (20).

4. Hand-held sprayer for horticulture and the like according to claim 1, **characterised in that** the upper closure cover (39) of the intermediate sprayer body (1) is joined by crimping by multiple couplings of its lower base which coincide with mating couplings (40,41,42,43,44,45 and 46) of the rim of the intermediate body (1).

5. Hand-held sprayer for horticulture and the like according to claim 1, **characterised in that** the horizontal passage valve (33) has an intermediate grooved structure with O-ring seals at its ends and is integral with the actual actuating trigger (14) forming a single part.

6. Hand-held sprayer for horticulture and the like according to claim 1, **characterised in that** the container comprises a large internal cylindrical extension (18) that is directed downwardly from the upper end of the container and is provided with an internal seat for receiving, by press-fitting, the lower end of the sprayer body.

## Patentansprüche

1. Handsprühvorrichtung für den Gartenbau und dergleichen, die umfasst:
- einen Behälter (2) für eine Sprühflüssigkeit;
- eine Handpumpe (6, 9, 10, 11, 12), um Druckluft zuzuführen;
- eine Auslassdüse (3),
- ein handbetätigtes Ventil (33), um den Durchgang von Flüssigkeit zu der Auslassdüse (3) zu steuern; und
- einen Zwischenkörper (1), der eine äußere Ummantelung (4) und ein inneres rohrförmiges Element (5) aufweist, derart, dass die äußere Ummantelung (4) mit dem oberen Abschnitt (16) des Flüssigkeitsbehälters (2) verbunden ist und das innere rohrförmige Element (5) in seinem Innenraum den Kolben (6) der Handpumpe aufnimmt; wobei der obere vordere Abschnitt des Zwischenkörpers (1) ein Gehäuse (7) für die Aufnahme eines Ventils (33) aufweist, um mit einer mit der Sprühdüse (3) kommunizierenden Kammer (38) zu kommunizieren,
wobei die Handsprühvorrichtung außerdem eine zylindrische Verlängerung (27), die einen rohrförmigen Körper (20) aufnimmt, um Flüssigkeit zu der Sprühdüse (3) zu transportieren, und eine hintere Verlängerung (13), um das Halten der Handsprühvorrichtung während ihres Gebrauchs zu erleichtern, umfasst, wobei der Sprühvorrichtungskörper an seinem oberen Abschnitt durch eine Abdeckung (39) verschlossen ist,
wobei die Handsprühvorrichtung **dadurch gekennzeichnet ist, dass**:
- die Handpumpe verwendet wird, um dem Behälter (2) Druckluft zuzuführen,
- das Ventil (33) ein horizontales Gleitventil ist,
- der Zwischenkörper (1) als ein einziges Spritzgussteil entworfen ist, dass die Ummantelung (4), das innere rohrförmige Element (5), das Gehäuse (7) und die zylindrische Erweiterung (27) und an seinem hinteren Abschnitt entfernt von der Düse (3) die Verlängerung (13) enthält, und
- die Abdeckung (39) als eine einzige Spritzgussabdeckung entworfen ist, die als eine Verkleidung für den oberen Abschnitt der Sprühvorrichtung wirkt und an ihrem vorderen Abschnitt den rohrförmigen Körper (20) umgibt und auf einen Anschlag (52), der die Kammer (38) für den Durchgang von Flüssigkeit zu der Düse (3) verschließt, presst.

2. Handsprühvorrichtung für den Gartenbau und dergleichen nach Anspruch 1, **dadurch gekennzeichnet, dass** der Luftpumpenkolben (6) einteilig mit seiner Stange (9) und einem oberen Griffabschnitt (10) mit anatomischer Form, um ihn für den Pumpvorgang leicht greifen zu können, ausgebildet ist.

3. Handsprühvorrichtung für den Gartenbau und dergleichen nach Anspruch 1, **dadurch gekennzeichnet, dass** die Düsenanordnung (3) durch Presspassung eingesetzt ist, durch die Abdeckung (39) in einer umgebenden Aussparung des oberen Abschnitts des Sprühvorrichtungskörpers am vorderen Ende befestigt ist und durch eine äußere Kappe (25), die darauf geschraubt ist und eine Auslassöffnung (34) aufweist, zu der sich die komprimierte Flüssigkeit durch eine axiale Öffnung (21) des rohrförmigen Körpers (20) und über ein System aus radialen Schlitzen (22) und äußersten Rillen des eigentlichen rohrförmigen Körpers (20) bewegt, verschlossen ist.

4. Handsprühvorrichtung für den Gartenbau und dergleichen nach Anspruch 1, **dadurch gekennzeichnet, dass** die obere Verschlussabdeckung (39) des Zwischensprühvorrichtungskörpers (1) durch Verrasten mittels mehrerer Kupplungen seiner unteren Basis, die mit Passkupplungen (40, 41, 42, 43, 44, 45 und 46) des Randes des Zwischenkörpers (1) zusammenpassen, verbunden ist.

5. Handsprühvorrichtung für den Gartenbau und dergleichen nach Anspruch 1, **dadurch gekennzeichnet, dass** das horizontale Durchlassventil (33) eine Zwischenrillenstruktur mit O-Ringdichtungen an ihren Enden besitzt und mit dem eigentlichen Betätigungshebel (14), der ein einziges Teil bildet, einteilig ausgebildet ist.

6. Handsprühvorrichtung für den Gartenbau und dergleichen nach Anspruch 1, **dadurch gekennzeichnet, dass** der Behälter eine große innere zylindrische Verlängerung (18) aufweist, die von dem oberen Ende des Behälters nach unten gerichtet ist und mit einem inneren Sitz versehen ist, um durch Presspassung das untere Ende des Sprühvorrichtungskörpers aufzunehmen.

## Revendications

1. Pulvérisateur portable pour horticulture et analogue, comprenant :
- un contenant (2) pour un liquide de pulvérisation ;
- une pompe à main (6, 9, 10, 11, 12) destinée à fournir de l'air comprimé ;
- une buse de sortie (3) ;
- une soupape à actionnement manuel (33) destinée à contrôler le passage de liquide jusqu'à la buse de sortie (3) ;
et
- un corps intermédiaire (1) qui présente un boîtier externe (4) et un élément tubulaire interne (5) de sorte que le boîtier externe (4) soit relié à la partie supérieure (16) du contenant à liquide (2), et l'élément tubulaire interne (5) reçoit, dans sa partie intérieure, le piston (6) de la pompe à main ; la partie avant supérieure dudit corps intermédiaire (1) comprenant un logement (7) destiné à recevoir une soupape (33) pour une communication avec une chambre (38) communiquant avec la buse de pulvérisation (3) ;
le pulvérisateur portable comprenant également un prolongement cylindrique (27) recevant un corps tubulaire (20) destiné à transporter un liquide jusqu'à la buse de pulvérisation (3) et un prolongement arrière (13) destiné à faciliter la préhension du pulvérisateur portable au cours de l'utilisation de celui-ci et ledit corps de pulvérisateur étant fermé, au niveau de sa partie supérieure, par un couvercle (39),
le pulvérisateur portable étant **caractérisé en ce que :**
- ladite pompe à main est utilisée pour fournir de l'air comprimé au contenant (2),
- ladite soupape (33) est une soupape coulissante horizontale,
- ledit corps intermédiaire (1) est conçu sous forme de pièce moulée par injection unique comprenant ledit boîtier (4), ledit élément tubulaire interne (5), ledit logement (7) et ledit prolongement cylindrique (27) et, au niveau d'une partie arrière éloignée de la buse (3), ledit prolongement (13)
- ledit couvercle (39) est conçu sous forme de couvercle moulé par injection unique qui sert de carénage pour la partie supérieure du pulvérisateur, et, au niveau de sa partie avant, entoure ledit corps tubulaire (20) et comprime un obturateur (52) qui ferme ladite chambre (38) pour le passage de liquide vers la buse (3).

2. Pulvérisateur portable pour horticulture et analogue selon la revendication 1, **caractérisé en ce que** le piston de pompe à air (6) est formé en tant que partie unique avec sa tige (9) et une partie de poignée supérieure (10) de forme anatomique pour faciliter la préhension de celle-ci pour l'opération de pompage.

3. Pulvérisateur portable pour horticulture et analogue selon la revendication 1, **caractérisé en ce que** l'assemblage de buse (3) est introduit par ajustement à la presse et est fixé par le couvercle (39) dans un évidement circonférentiel de la partie supérieure du corps de pulvérisateur et, au niveau de l'extrémité avant, est fermé par un capuchon externe (25) qui est vissé sur celui-ci et comprend un orifice de sortie (24) jusqu'auquel le liquide sous pression se déplace par l'intermédiaire d'un orifice axial (21) dudit corps tubulaire (20) et un système d'ouvertures radiales (22) et des rainures extrêmes du corps tubulaire en tant que tel (20).

4. Pulvérisateur portable pour horticulture et analogue selon la revendication 1, **caractérisé en ce que** le couvercle de fermeture supérieur (39) du corps de pulvérisateur intermédiaire (1) est joint en sertissant de multiples couplages de sa base inférieure qui coïncident avec des couplages d'accouplement (40, 41, 42, 43, 44, 45 et 46) du bord du corps intermédiaire (1).

5. Pulvérisateur portable pour horticulture et analogue selon la revendication 1, **caractérisé en ce que** la soupape de passage horizontale (33) possède une structure rainurée intermédiaire avec des joints toriques au niveau de ses extrémités et est solidaire de la gâchette d'actionnement en tant que telle (14) formant une partie unique.

6. Pulvérisateur portable pour horticulture et analogue selon la revendication 1, **caractérisé en ce que** le contenant comprend un prolongement cylindrique interne de taille importante (18) qui est dirigé vers le bas à partir de l'extrémité supérieure du contenant et est pourvu d'un siège interne destiné à recevoir, par ajustement à la presse, l'extrémité inférieure du corps de pulvérisateur.
